# EUROPÄISCHE PATENTSCHRIFT

(11) **EP 1 471 793 B1**
(45) Veröffentlichungstag und Bekanntmachung des Hinweises auf die Patenterteilung: **14.07.2010**
(21) Anmeldenummer: 02795192.0
(22) Anmeldetag: 14.12.2002
(51) Int. Cl.: A23B 4/023, A23B 4/027, A23B 4/24, A23L 1/314, A23L 1/318

(54) **VERWENDUNG EINER PHOSPHATMISCHUNG ZUR HERSTELLUNG VON KONZENTRIERTEN LÖSUNGEN UND SALZLAKEN FÜR DIE NAHRUNGSMITTELINDUSTRIE**
USE OF A PHOSPHATE MIXTURE FOR THE PRODUCTION OF CONCENTRATED SOLUTIONS AND BRINE FOR THE FOOD INDUSTRY
UTILISATION D'UN MELANGE DE PHOSPHATE POUR LA PRODUCTION DE SOLUTIONS ET SAUMURES CONCENTREES POUR LES INDUSTRIES ALIMENTAIRES

(30) Priorität: 22.12.2001 DE 10163954
(43) Veröffentlichungstag der Anmeldung: 03.11.2004
(73) Patentinhaber: BK Giulini Chemie GmbH, 67065 Ludwigshafen (DE)
(72) Erfinder: FISCHER-NÄGELE, Ulrike, Dr., 68723 Schwetzingen (DE); NEUMANN, Frank, 68623 Lampertheim (DE); BRAUN, Peter, Dr., 64646 Heppenheim (DE); TÄNZLER, Richard, Dr., 69514 Laudenbach (DE); KRUG, Bernd, Dr., 35435 Wettenberg (DE)
(86) Internationale Anmeldenummer: PCT/EP2002/014272
(87) Internationale Veröffentlichungsnummer: WO 2003/055318

(56) Entgegenhaltungen:
- WO-A-01/00527
- WO-A-01/24639
- WO-A-98/07336
- WO-A-99/00324
- GB-A- 1 044 226
- US-A- 4 867 958

## Beschreibung

Die vorliegende Erfindung hat eine neue Phosphatmischung zum Gegenstand, die durch ihre sehr gute Löslichkeit in Wasser und wässrigen, salzhaltigen Lösungen (Salzlaken) gekennzeichnet ist.

Die Verwendung von Phosphatsalzen in der Nahrungsmittelindustrie ist seit langem bekannt. In "Phosphates in food" von Ricardo Molins, CRC Presse 1991, Verlag Boca Raton, Ann Arbour werden eine ganze Reihe von speziellen Anwendungen der Phosphate in der Lebensmittelindustrie, wie z.B. bei der Verarbeitung von Fleisch, Fisch, Getränken und Milchprodukten beschrieben. Phosphate stellen sog. funktionelle Lebensmittelzusatzstoffe dar, d.h. ihr Einsatz ist abhängig vom Anwendungsgebiet ganz speziell ausgerichtet auf diverse Problemstellungen.
So wird in der WO/01/00527 A1 (D1) eine Polyphosphatverbindung mit hohem Kaliumgehalt beschrieben, welche die folgende allgemeine Formel aufweist: (K,Na)ₙ₊₂O(PO₃)ₙ mit K/Na Verhältnis von 0,5-3,8 und mit n im Durchschnitt größer als 10. Diese Verbindung wird eingesetzt als Substitutionsprodukt in natriumarmen Lebensmitteln, vor allem Getränken und Fleischprodukten.
In der WO/01/24639 A1 (D2) wird die gleiche, wie in der (D1) beschriebenen Verbindung in einer Mischung mit 50 % Dinatriumphosphat (DNP) und 35 % Tetranatriumpyrophosphat (TNPP) zur Behandlung von Fleisch nach dem Schlachten eingesetzt. Ins Fleisch injiziert verhindert sie die üblicherweise nach dem Schlachten auftretende Muskelsteife und Farbveränderung des Schlachtfleisches.

Verantwortlich für dieses breite Anwendungsspektrum der Phosphate sind deren Eigenschaften wie:
- Pufferungsvermögen (zur pH-Wert-Einstellung, als auch zur pH-Wert Stabilisierung)
- Komplexbildungskapazität auf mehrwertige Kationen und damit indirekt verbunden die Funktion als Antioxidant (durch Bindung pro-oxidativer Kationen), als auch als antimikrobielle Substanz und zur Konsistenz-Beeinflussung;
- Funktion als Polyanion in Wechselwirkung mit verschiedenen Proteinfraktionen einzelner Lebensmittel
- Säuerungsvermögen (zur pH-Wert-Einstellung in Getränken als auch als Säuerungskomponente in Backtriebmitteln);

Ihre jeweilige Funktion ist von ihrer Struktur bzw. von ihrem Kondensationsgrad, dem pH-Wert, als auch dem Kation des Salzes abhängig.

Die in dieser Erfindung verwendeten chemischen Namen der einzelnen Phosphate sind die folgenden:

| Abkürzung: | Name: | chemische Formel: |
|---|---|---|
| STPP oder NTPP | Sodium (Natrium)-tripolyphosphat | Na₅P₃O₁₀ |
| KTPP | Kalium tripolyphosphat | K₅P₃O₁₀ |
| TKPP | Tetrakalium pyrophosphat | F₄P₂O₇ |
| TNPP | Tetranatrium pyrophosphat | Na₄P₂O₇ |
| NPP | Natrium polyphosphat | Na₃PO₃- (NaPO₃)ₓ-Na₂PO₄ |
| KPP | Kalium polyphosphat | wie NPP nur mit Kalium |
| MNP | Mononatnum phosphat | NaH₂PO₄ |
| DNP | Dinatrium phosphat | Na₂HPO₄ |
| TNMP | Trinatrium monophosphat | Na₃PO₄ |
| MKP | Monokalium phosphat | KH₂PO₄ |
| DKP | Dikaliumphosphat | K₂HPO₄ |

Als Phosphatsalze gemäß der vorliegenden Erfindung werden KTPP, TKPP NPP und MNP und/oder MKP verwendet.

Neben der direkten Zugabe von Phosphaten in der Lebensmittelindustrie als Trockensubtanz (Pulverform) werden in einer ganzen Reihe von Anwendungen flüssige Darreichungsformen angewandt, sog. Phosphatlösungen oder Phosphatlaken; dies ist in Bereichen der Fleischverarbeitung (z.B. Herstellung von Kochpöckelwaren) als auch bei der Behandlung von Seafood Produkten (Fischfilets, Crustacaen, Molluscacaen etc. ) der Fall. Um Phosphate hierbei effektiv und mit hoher Funktionalität einsetzen zu können, müssen sie folgende wichtige Eigenschaften aufweisen:
1.) sie müssen einen pH-Wert (in wässeriger Lösung) von 8 bis 10 aufweisen.
2.) Sie müssen eine gute Löslichkeit in Wasser erzielen
3.) Sie müssen eine gute Löslichkeit in salzhaltigen Lösungen (Salzlaken) aufweisen.
4.) Die gebildeten Lösungen müssen rückstandfrei und klar sein, d.h. keine Ausfällungen und Bodenkörper aufweisen.
5.) Als funktioneller Anteil des zusammengesetzten Lebensmittelzusatzstoffes soll ein gewisser Anteil an Natrium und/oder Kaliumdi - und/oder triphosphaten enthalten sein.

Unter Salzlaken versteht der Fachmann in der Nahrungsmittelindustrie eine Lösung, in der Kochsalz (NaCl) in hohen Konzentrationen teils bis zur Sättigung gelöst ist. Eine ganze Reihe handelsüblicher Phosphate und Phosphatmischungen für die Fleisch- und Fischindustrie erfüllen einzelne der geforderten Eigenschaften, jedoch nicht alle dieser Forderungen.
Somit stellte sich die Aufgabe, eine Phosphatmischung zu finden, die die oben erwähnten Anforderungen erfüllt.
Die erfindungsgemäße Phosphatmischung ist durch die folgenden Ansprüche gekennzeichnet:
1 Verwendung einer Phosphatmischung bestehend aus :
   a.) 70 eines klarlöstichen Kaliumtripolyphosphates (KTPP) mit einem P₂O₅ Gehalt von 46,0 Gew. % bis 47, 0 Gew. % und einem K₂O /P₂O₅ Molverhältnis von 1,7 bis 1,78
   b.) 28 Gew. % Natriumpolyphosphat mit einem P₂O₅ Gehalt von 60 bis 71,5 Gew.-%
   c.) 2 Gew. % MₓH₃₋ₓ PO₄, mit M = Na, K und x=1-3 oder 2 Gew.% MₓH₄₋ₓP₂O₇ mit x=4, 3, 2 und M =Na, und/oder M=K, dann ist x=4,
   wobei die Mischung einen pH-Wert von 9 und eine 6 % ige Lösung eine Trübung in Wasser und Salzlaken von < 5 TE/F aufweist, zur Herstellung von phosphathaltigen Salzlösungen in der Nahrungsmittelindustrie.
2. Verfahren zur Herstellung von phosphathaltigen Salzmischungen, bestehend aus 70 Gew. % eines klarlöslichen Kaliumtripolyphosphates (KTPP) mit einem P₂O₅ Gehalt von 46,0 Gew. % bis 47,0 Gew. %, vorzugsweise 46,4 Gew. % bis 46,8 Gew.%, insbesondere 46,4 Gew.% und einem K₂O /P₂O₅ Molverhältnis von 1,7 bis 1,78, vorzugsweise 1,73 bis 1,75, insbesondere 1,74, 28 Gew. % Natriumpolyphosphat mit P₂O₅ Gehalt von 60 bis 71,5 % und 2 Gew. % MₓH₃₋ₓPO₄ mit x=1-3 und M=Na, K oder 2 Gew. % MₓH₄₋ₓP₂O₇ mit x=4, 3 ,2 und M=Na und/oder M=K, dann ist x=4, **dadurch gekennzeichnet, dass** man Kaliumphosphatsalze oder Kaliumoxid und P₂O₅ im gewünschten Verhältnis von Kalium:Phosphor mischt und auf Schmelztemperatur erwärmt und bis zur Gleichgewichtsbildung hält, danach abfüllt, fein vermahlt und mit entsprechend vermahlen Pulvern von Natriumpolyphosphat im angegebenen Verhältnis mischt.

Erfindungswesentlich ist die Verwendung eines sog. klarlöslichen Kaliumtnipolyphosphates (KTPP). Dies wird aus einer Schmelze gewonnen, welche einen P₂O₅ Gehalt von 46,0 bis 47,0 % , vorzugsweise 46,4 bis 46,8 und insbesondere 46,4 % aufweist und stöchiometrisch aus einem Gemisch von Kaliumphosphat und Tetrakaliumpyrophosphat in einem Verhältnis von etwa 3: 1 besteht. Die Schmelze wird durch Mischen von entsprechenden Mengen von Kaliumphosphaten, insbesondere Trikaliumphosphat und P₂O₅ unter Erwärmen auf Schmelztemperatur hergestellt und bei dieser Temperatur bis zur Einstellung des Reaktiousgleichgewichtes belassen. Es bildet sich so eine Mischung, die neben Kaliumtriphosphat und Tetrakaliumpyrophosphat nur geringe Mengen an Ortho-und Diphosphaten, sowie die schwerer löslichen Kaliummetaphosphate enthält, welche für die trüber Lösung von Polyphosphaten außerhalb dieses engen Bereichs verantwortlich sind, siehe Phasendiagramm aus J.R. van Wazer, Phosphorous and its compounds , Vol. VI, Seite 608, Interscience Publishers Inc. New York.

Die Hauptkomponenten (Natdumpolyphosphat und Kaliumpolyphosphat) der erfindungsgemäßen Mischung zeigen für sich allein eine hohe Grenzlöslichkeit in Wasser (> 50 %)

**Tab. 1 : Grenzlöslichkeit (in g Phosphatmischung pro 100 g Lösung) von der erfindungsgemäßen Mischung im Vergleich zu Phosphatmischungen nach Stand der Technik:**

| Phosphattype | g Phosphat / 100g Lösung [% m/m] | |
|---|---|---|
| Erfindungsgemäße Mischung | 50 | |
| Kaliumtripolyphosphat (KTPP) | 64 | sehr trüb!! |
| Klarlösliches KTPP | > 50 | |
| Natriumtripolyphosphat (NTPP) | 14 | |
| Tetrakaliumpyrophosphat (TKPP) | 65 | |
| NTPP / NPP - 90: 10-Blend | 17 | |
| NTPP / Polyphosphat 80:20-Blend | 16 | |
| Natriumpolyphosphate | > 50 | |

Weiterhin zeigen einzelne Hauptkomponenten der erfindungsgemäßen Mischung auch in Salzlaken gute Löslichkeitseigenschaften (siehe Tabelle 2, Beispiel 1).
Die bisher bekannten Phosphattypen bzw. Phosphatkombinationen zeigen einzelne der in den o.g. Anforderungen 1 bis 5, jedoch nicht alle:
- so ist das in Tabelle 1 genannte KTPP zwar in hohem Maße löslich
- (64 g/100g Lösung) als auch in Gegenwart von Kochsalz löslich, jedoch trüb.
- Die in Tabelle 1 und 2 ebenfalls erwähnten Natriumpolyphosphaten sind ebenfalls gut löslich, es fehlen jedoch die in Anforderung 5 genannten funktionellen Anteile an Di - und Triphosphate.
Durch Herstellung einer Mischung aus beiden Hauptkomponenten der erfindungsgemäßen Mischung und einem weiteren Phosphat zur pH-Wert-Einstellung (Orthophosphat oder Diphosphat) werden Synergieeffekte genutzt, die die Löslichkeit in hochkonzentrierten Salzlaken steigern.

In Tabelle 2 werden an Hand von 3 Beispielen der synergistische Effekt der erfindungsgemäßen Mischung und deren Auswirkung auf die Löslichkeit der salzhaltigen Lösungen demonstriert. Beispiel 1 und 2 zeigen die Löslichkeit in traditioneller Reihenfolge, d.h. die Phosphattype bzw. Phosphatkombination wird als erste Komponente in Wasser gelöst, danach wird die entsprechende Menge an Natriumchlorid (Kochsalz) gelöst.

In der Nahrungsmittelindustrie z.B. bei der Kochschinkenherstellung ist es üblich zuerst das Phosphat in Wasser zu lösen, dann Kochsalz zuzugeben. Unter der sog. inversen Herstellung versteht man, dass zuerst die Kochsalz - Lösung (Lake) hergestellt und dann das Phosphat zugegeben wird.
Beispiel 3 zeigt darüber hinaus den synergistischen Effekt der erfindungsgemäßen Mischung in der Art, dass mit dieser Mischung sogar in "inverser Reihenfolge" gelöst werden kann, d.h. das Phosphat wird in eine Salzlösung eingerührt und ist löslich -eine Eigenschaft, die die bisher bekannten Phosphattypen bzw. Phosphatkombinationen nicht aufweisen

### Tabelle 2 : Synergistische Effekt der erfindungsgemäßen Mischung auf die Löslichkeit und Stabilität in salzhaltigen Lösungen (Lacken)

### Beispiel 1: (Löslichkeit in salzhaltigen -wässerigen Lösungen Salzlaken)

5g Phosphat (Phosphatmischung) werden unter Rühren in 75g Wasser gelöst, anschließend werden 20g Kochsalz eingerührt. Es wird beurteilt, ob die Lake über einen längeren Zeitraum (16h) stabil ist, d.h. keine Ausfällung (Bodenkörper) auftritt.

| | | | |
|---|---|---|---|
| Beurteilung: | + | = | stabile Lake |
| | - | = | es kommt zu Ausfällungen / Bodenkörper |

| | | | Beurteilung der Lakestabilität von verschiedenen Phosphaten / Phosphat-Blends im System 5% Phosphat, 20% NaCl, 75% Wasser |
|---|---|---|---|
| Erfindungsgemäße Phosphatmischung | | | + |
| Pentakaliumtriphosphat (NTPP) | | | + *) |
| Pentanatriumtriphosphat (NTPP) | | | - |
| Tetrakaliumdiphosphat (TKPP) | | | - |
| NTPP / TNPP - 9Q: 10-Blend | | | - |
| Natriumpolyphosphate | | | + |

| | | | |
|---|---|---|---|
| *) nach dem Ansetzen liegt eine trübe Lösung vor, nach 16h geringe Ausfällungen (Bodenkörper) | | | |

### Beispiel 2: Löslichkeit in salzhaltigen -wässrigen Lösungen Salzlaken in traditioneller Reihenfolge

8 g Phosphat (Phosphatmischung) werden unter Rühren in 68g Wasser gelöst, anschließend werden 24g Kochsalz eingerührt. Es wird beurteilt, ob die Lake über einen längeren Zeitraum (16h) stabil ist, d.h. keine Ausfällung (Bodenkörper) auftritt.

| | | | |
|---|---|---|---|
| Beurteilung: | + | = | stabile Lake |
| | - | = | es kommt zu Ausfällungen / Bodenkörper |

| | | | Beurteilung der Lakestabilität von verschiedenen Phosphaten / Phosphat-Blends im System 8% Phosphat, 24% NaCl, 68% Wasser |
|---|---|---|---|
| Erfindungsgemäße Phosphatmischung | | | + |
| Pentakaliumtriphosphat (KTPP) | | | - (keine stabile Lake nach 16h) |
| Klarlösliches KTPP | | | - (keine stabile Lake nach 16h) |
| (NTPP) | | | - (nicht löslich in Salz-Laken) |
| Tetrakaliumdiphosphat (TKPP) | | | - (nicht löslich in Salz-Laken) |
| Pentanatriumtriphosphat (NTPP) / Tetranatriumdiphosphat (TNPP) - 90:10- Blend | | | - (nicht löslich in Salz-Laken) |
| Natriumpolyphosphate | | | - (keine stabile Lake nach 16h) |

### Beispiel 3: Löslichkeit und Stabilität von Phosphaten in salzhaltigen wässerigen Lösungen(Laken) bei inverser Herstellung der Lake

22g Kochsalz werden unter Rühren in 72,5g Wasser gelöst, anschließend werden 5,5g Phosphat (Phosphatmischung) eingerührt. Es wird beurteilt, ob die Lake über einen längeren Zeitraum (16h) stabil ist, d.h. keine Ausfällung (Bodenkörper) auftritt.

| | | | |
|---|---|---|---|
| Beurteilung: | + | = | stabile Lake |
| | - | = | es kommt zu Ausfällungen / Bodenkörner |

| | | | Beurteilung der Lakestabilität von verschiedenen Phosphaten/ Phosphatmischungen im inversen System 22% NaCl, 72,5% Wasser, 5,5% Phosphat |
|---|---|---|---|
| Erfindungsgemäße Phosphatmischung | | | + |
| Pentakaliumtriphosphat (KTPP) | | | + *) |
| Klarlösliches KTPP | | | - |
| Pentanatnumtriphosphat (NTPP) | | | - |
| Tetrakaliumdiphosphat (TKPP) | | | - |
| NTPP / TNPP - 90:10-Blend | | | - |
| Natriumpolyphosphat (P₂O₅ = 60%) | | | - |
| Natriumpolyphosphat (P₂O₅ = 68%) | | | + |

| | | | |
|---|---|---|---|
| *) nach dem Ansetzen liegt eine trübe Lösung vor, nach 16h geringe Ausfällungen (Bodenkörper). | | | |

## Patentansprüche

1. Verwendung einer Phosphatmischung bestehend aus :
a.) 70 Gew. % eines klarlöslichen Kaliumtripolyphosphates (KTPP) mit einem P₂O₅ Gehalt von 46,0 Gew. % bis 47, 0 Gew. % und einem K₂O /P₂O₅ Molverhältnis von 1,7 bis 1,78
b.) 28 Gew. % Natriumpolyphosphat mit P₂O₅ Gehalt von 60 - 71,5 % c.) 2 Gew. % MₓH₃₋ₓPO₄ mit x =1 - 3 und M = Na, K oder
2 Gew.-% MₓH₄₋ₓP₂O₇ mit x = 4, 3, 2 und M = Na und/oder M = K, dann ist x = 4, wobei die Mischung einen pH-Wert von 9 und eine 6 % ige Lösung eine Trübung in Wasser und Salzlaken von < 5 TE/F aufweist, zur Herstellung von phosphathaltigen Salzlösungen in der Nahrungsmittelindustrie.

2. Verfahren zur Herstellung von phosphathaltigen Salzmischungen bestehend aus 70 Gew. % eines klarlöslichen Kaliumtripolyphosphates (KTPP) mit einem P₂O₅ Gehalt von 46,0 Gew. % bis 47, 0 Gew. %, vorzugsweise 46,4 bis 46,8 Gew. % , insbesondere 46,4 Gew. % und einem K₂O /P₂O₅ Molverhältnis von 1,7 bis 1,78, vorzugsweise 1,73 bis 1,75, insbesondere 1,74, 28 Gew. % Natriumpolyphosphat mit P₂O₅ Gehalt von 60 - 71,5 % und 2 Gew. % MₓB₃₋ₓPO₄ mit x =1 - 3 und M = Na, K oder
2 Gew.-% MₓH₄₋ₓP₂O₇ mit x = 4, 3, 2 und M = Na und/oder M = K, dann ist x = 4, **dadurch gekennzeichnet, dass** man Kaliumphosphatsalze oder Kaliumoxid und P₂O₅ im gewünschten Verhältnis von Kalium : Phosphor mischt und Schmelztemperatur erwärmt und bis zur Gleichgewichtsbildung hält, danach abfüllt, fein vermahlt und mit entsprechend vermahlen Pulvern von Natriumpolyphosphat im angegebenen Verhältnis mischt.

## Claims

1. Use of a phosphate mixture consisting of:
a) 70 percent (w/w) clearly soluble potassium polyphosphate (KTPP) with a P₂O₅ content of 46.0 percent (w/w) to 47.0 percent (w/w) and a K₂O:P₂O₅ molar ratio of 1.7 to 1.78.
b) 28 percent (w/w) sodium polyphosphate with a P₂O₅ content of 60 - 71.5 percent
c) 2 percent (w/w) MₓH₃₋ₓPO₄ , with x = 1 - 3 and M = Na, K, or
2 percent (w/w) MₓH₄₋ₓP₂O₇ , with x = 4, 3, 2 and M = Na and/or M = K, whereby x = 4, wherein the mixture has a pH value of 9 and a 6% solution displays a turbidity in water and brine of < 5 FTU, for the preparation of phosphate-containing salt solutions in the food industry.

2. The method to manufacture phosphate-containing salt mixtures consisting of 70 percent (w/w) clearly soluble potassium polyphosphate (KTPP) with a P₂O₅ content of 46.0 percent (w/w) to 47.0 percent (w/w), preferentially 46.4 to 46.8 percent (w/w), especially 46.4 percent (w/w), and a K₂O:P₂O₅ molar ratio of 1.7 to 1.78, preferentially 1.73 to 1.75, especially 1.74, 28 percent (w/w) sodium polyphosphate with a P₂O₅ content of 60 - 71.5 percent and 2 percent (w/w) MₓH₃₋ₓPO₄, with x = 1 - 3 and M = Na, K, or
2 percent (w/w) MₓH₄₋ₓP₂O₇ , with x = 4, 3, 2 and M = Na and/or M = K, whereby x = 4, wherein potassium phosphate salts or potassium oxide and P₂O₅ are mixed in a desired ratio of potassium: phosphorus and the melting temperature is elevated and kept until equilibrium is reached. This is then packed, finely ground and mixed with the correspondingly ground powders of sodium polyphosphate in the ratio indicated.

## Revendications

1. Utilisation d'un mélange de phosphate se composant de :
a.) 70 % en poids d'un tripolyphosphate de potassium (KTPP) intégralement soluble présentant une teneur en P₂O₅ comprise entre 46,0 % en poids et 47,0 % en poids et un rapport moléculaire de K₂O /P₂O₅ de 1,7 à 1,78 ;
b.) 28 % en poids de polyphosphate de sodium présentant une teneur en P₂O₅ comprise entre 60 % et 71,5 % ;
c.) 2 % en poids de M_{χ}H_{3-χ}PO₄, χ= 1 à 3 et M = Na, K ou
2 % en poids de M_{χ}H_{4-χ}P₂O₇, χ= 4, 3, 2 et M = Na et / ou M = K ;
puis χ= 4, le mélange présente cependant une valeur de pH de 9 et une solution à 6 % présente une turbidité dans l'eau et la saumure < 5 TE/F, dans la fabrication de sérum salin contenant du phosphate pour l'industrie alimentaire.

2. Procédé de fabrication de mélanges salins contenant du phosphate se composant de 70 % en poids d'un tripolyphosphate de potassium (KTPP) intégralement soluble présentant une teneur en P₂O₅ comprise entre 46,0 % en poids et 47,0 % en poids, de préférence entre 46,4 et 46,8 % en poids et notamment 46,4 % en poids et un rapport moléculaire de K₂O /P₂O₅ de 1,7 à 1,78, de préférence de 1,73 à 1,75, et notamment 1,74, 28 % en poids de polyphosphate de sodium présentant une teneur en P₂O₅ comprise entre 60 % et 71,5 % et 2 % en poids de M_{χ}H_{3-χ}PO₄, χ= 1 à 3 et M = Na, K ou
2 % en poids de M_{χ}H_{4-χ}P₂O₇, χ= 4, 3, 2 et M = Na et / ou M = K, puis χ= 4, **caractérisé en ce que** l'on mélange des sels de phosphate de potassium ou d'oxyde de potassium et P₂O₅ selon un rapport potassium : phosphore souhaité, **en ce qu'**on le chauffe à la température de fusion et **en ce qu'**on le maintient jusqu'à l'obtention d'un équilibre, puis **en ce qu'**on le verse dans un récipient, le pulvérise et **en ce qu'**on le mélange avec des poudres de polyphosphate de sodium broyées de manière correspondante selon un rapport donné.
